# EUROPÄISCHE PATENTSCHRIFT

(11) **EP 2 791 633 B1**
(45) Veröffentlichungstag und Bekanntmachung des Hinweises auf die Patenterteilung: **03.02.2021**
(21) Anmeldenummer: 12822969.7
(22) Anmeldetag: 05.12.2012
(51) Int. Cl.: G01G 11/08

(54) **VERFAHREN ZUR GRAVIMETRISCHEN MASSE-DOSIERUNG VON SCHÜTTGUT UND DIFFERENZIALDOSIERWAAGE**
METHOD FOR THE GRAVIMETRIC MASS METERING OF BULK SOLIDS AND DIFFERENTIAL METERING SCALE
PROCÉDÉ DE DOSAGE MASSIQUE GRAVIMÉTRIQUE DE MATIÈRE EN VRAC ET BALANCE À DOSAGE DIFFÉRENTIEL

(30) Priorität: 12.12.2011 DE 102011120728
(43) Veröffentlichungstag der Anmeldung: 22.10.2014
(73) Patentinhaber: Schenck Process Europe GmbH, 64293 Darmstadt (DE)
(72) Erfinder: ALLENBERG, Bernd, 64367 Mühltal (DE)
(86) Internationale Anmeldenummer: PCT/EP2012/005010
(87) Internationale Veröffentlichungsnummer: WO 2013/087161

(56) Entgegenhaltungen:
- DE-A1-102010 009 753
- US-A- 4 238 956
- US-A1- 2004 255 692
- US-A1- 2008 244 986
- US-A1- 2009 133 507

## Beschreibung

Die Erfindung betrifft ein Verfahren zur gravimetrischen Masse-Dosierung von Schüttgut und eine hierfür geeignete Differenzialdosierwaage.

Bekanntermaßen werden zur gravimetrischen Masse-Dosierung von Schüttgut häufig Differenzialdosierwaagen, auch als Dosierdifferenzialwaagen bekannt, eingesetzt. Deren Prinzip, vgl. z.B. Vetter: "Handbuch Dosieren", ISBN 3-8027-2199-3; Kapitel "Dosierdifferenzialwaagen", ist physikalisch sehr einfach und theoretisch ohne Fehler.

Bei Differenzialdosierwaagen in der herkömmlichen Ausführung bestehen allerdings zwei wesentliche Probleme.
Zum Einen muss nach einiger Zeit der Behälter nachgefüllt werden, was in der Regel mit einer unbekannten Förderstärke stattfindet. In dieser Zeit kann die Förderstärke aus dem Behälter nicht über die Gewichtsveränderung pro Zeit ermittelt werden und Veränderungen der Schüttgut-Dichte in der Austragseinrichtung führen zu Fehlern im Massestrom.

Andererseits ist das Behältergewicht nur mit Messfehlern zu ermitteln. Diese Fehler müssen daher unterdrückt werden, damit sie nicht zu einem fehlerhaften Stellsignal an das Dosierorgan führen. Dazu wird in der Regel ein Tiefpassfilter als Differenzialfilter eingesetzt. Je größer jedoch die Störungen im Verhältnis zur Gewichtsabnahme durch den Schüttgutaustrag sind, desto tiefer muss die Grenzfrequenz des Filters eingestellt werden. Diese Einstellung führt zu einer erheblichen Reduzierung der Ausregelgeschwindigkeit für schnelle Veränderungen der Schüttgut-Dichte in der Austrags- bzw. Fördereinrichtung, welche das Schüttgut aus dem Behälter kommend austrägt bzw. abfördert. Dieses Problem tritt ferner verstärkt bei der Dosierung von klebenden und feinkörnigen Schüttgütern mit kleiner Förderstärke und dazu relativ großen Differenzialdosierwaagen mit hoher Tara-Last auf.

Die genannten Probleme stellen sich insbesondere bei Differenzialdosierwaagen, bei denen die gravimetrische Austrags- bzw. Förderleistung wegen der Fließeigenschaften einen zeitlich stark variablen Zusammenhang zur volumetrischen Austragsleistung aufweist. Dies ist insbesondere bei sehr klebenden oder feinkörnigen Schüttgütern der Fall, die unterschiedlich gut aus dem Behälter ausgetragen werden können. Diese Probleme sind den Anwendern von Differenzialdosierwaagen bekannt, und eine Lösung der Probleme wird schon lange gesucht. Wegen der genannten Probleme mit Differenzialdosierwaagen gibt es auf dem Markt sehr viele andere Messverfahren für die Durchflussmessung von Schüttgütern, z. B. Bandwaagen, Schneckenwaagen, Coriolis-Messsysteme, Messsysteme mit Ausnutzung von Impulsänderungen im Schüttgutstrom und Messmethoden, die andere physikalische Effekte ausnutzen, um auf die Masse zu schließen, z. B. elektro-magnetische Verfahren, vgl. z.B. auch Vetter: "Handbuch Dosieren", ISBN 3-8027-2199-3; Kapitel "Durchlaufdosiergeräte für Schüttgüter". Auch die Druckschriften DE 44 06 046 C2, WO 2008/055485 A1, US 3 635 082 A, DE 20 18 618 A1, DE 33 15 476 A, EP 0 669 522 A2 und DE 10 2006 052 637 A1 beschreiben verschiedene Einrichtungen und Verfahren zur Durchflussmessung von Medien.

Alle diese Messsysteme sind entweder sehr aufwendig herzustellen, wenn sie lediglich kleine Messfehler aufweisen sollen oder weisen prinzipbedingt wegen des verwendeten physikalischen Effekts Kreuz-Empfindlichkeiten für andere Größen auf, die dann zu erheblichen Messfehlern führen. Bei vielen Verfahren wurde bereits mit erheblichem Aufwand und teilweise geringem Erfolg versucht, die Messfehler auf das notwendige Maß zu reduzieren.

Andere Beispiele von Differenzialdosierwaagen sind durch die Offenbarung von Patentdokumenten DE 10 2010 009 753 A1 und US 2008/0244986 A1 gegeben.

Aufgabe der Erfindung ist es, einen Weg aufzuzeigen, mit welchem die vorgenannten Nachteile reduziert, bevorzugt gänzlich eliminiert werden.

Erfindungsgemäße Lösungen der Aufgabe sind durch Verfahren zur gravimetrischen Masse-Dosierung von Schüttgut und hierfür geeignete Differenzialdosierwaagen mit den Merkmalen der anhängigen Ansprüche gegeben, wobei bevorzugte und/oder vorteilhafte Weiterbildungen und Ausführungsformen Gegenstand der Unteransprüche sind.

Die Erfindung schlägt demnach ein Verfahren zur gravimetrischen Masse-Dosierung von Schüttgut mittels einem Behälter mit dem zu dosierenden Schüttgut und einer volumetrischen Fördereinrichtung vor, mit der das Schüttgut mit einem Massestrom, der zeitlich einem Sollwert für eine Soll-Förderstärke folgt, vom Behälter kommend abgefördert wird. Zur Ermittlung dieses Massestroms wird ein Signal ermittelt, welches das Gesamtgewicht einer aus Behälter sowie hierbei umfasstem Schüttgut oder aus Behälter und Austragseinrichtung sowie hierbei umfasstem Schüttgut gebildeten Einheit repräsentiert. Anschließend wird das Signal Anlagen- und/oder Schüttgut-spezifisch verarbeitet, insbesondere differenziert und gefiltert, um ein den Massestrom repräsentierendes erstes Signal zu berechnen, aus welchem zusammen mit dem Sollwert für die Soll-Förderstärke ein erstes Stellsignal berechnet wird. Nach Verlassen des Massestroms der Fördereinrichtung wird ein den Massestrom repräsentierendes, zweites Signal gemessen und basierend auf dem den Massestrom repräsentierenden zweiten Signal und dem ersten Stellsignal wird ein zweites Stellsignal berechnet und einem Antrieb der Fördereinrichtung zur Steuerung der Fördereinrichtung zugeführt.

Eine hierfür geeignete Differenzialdosierwaage umfasst gemäß Erfindung einen Behälter mit dem zu dosierenden Schüttgut und einer volumetrischen Fördereinrichtung, mit der das Schüttgut mit einem Massestrom, der zeitlich einem Sollwert für eine Soll-Förderstärke folgt, vom Behälter kommend abgefördert wird. Ferner umfasst die Differenzialdosierwaage gemäß Erfindung eine Gewichtserfassungseinheit und eine Differenzialfiltereinrichtung, welche ferner eine erste Regeleinrichtung umfasst. Die Gewichtserfassungseinheit ist ausgebildet zur Ermittlung des Gesamtgewichts einer aus Behälter sowie hierbei umfasstem Schüttgut oder aus Behälter und Austragseinrichtung sowie hierbei umfasstem Schüttgut gebildeten Einheit, und gibt ein dieses Gesamtgewicht repräsentierende Signal aus und an die Differenzialfiltereinrichtung über. Die Differenzialfiltervorrichtung ist ausgebildet, aus diesem das Gesamtgewicht repräsentierende Signal ein den Massestrom repräsentierendes erstes Signal zu berechnen. Aus dem den Massestrom repräsentierenden ersten Signal und dem Sollwert für die Förderstarke berechnet ein der Regler ein erstes Stellsignal. Zusätzlich umfasst die Differenzialdosierwaage eine zweite Regeleinrichtung und eine Massestrommesseinrichtung, wobei die Massestrommesseinrichtung derart ausgebildet und angeordnet ist, dass das Schüttgut nach dem Verlassen der Fördereinrichtung durch diese Massestrommesseinrichtung hindurch laufen kann und die Massestrommesseinrichtung ein den Massestrom repräsentierendes zweites Signal berechnet. Die zweite Regeleinrichtung errechnet basierend auf dem den Massestrom repräsentierenden zweiten Signal und dem ersten Stellsignal ein zweites Stellsignal und führt dieses einem Antrieb der Fördereinrichtung zur Steuerung der Fördereinrichtung zu.

Die Erfindung ermöglicht somit, dass selbst während der Füllphase der tatsächliche Schüttgutstrom aus dem Behälter geregelt {closed loop) und nicht nur gestellt (open loop) werden kann. Weiterhin erfolgt auch dann eine schnelle Regelung, wenn die Differenzialfiltervorrichtung wegen der Störungen ein Differenzialfilter mit sehr niedriger Grenzfrequenz haben muss.

Das erfindungsgemäße Verfahren zur gravimetrischen Masse-Dosierung von Schüttgut und die erfindungsgemäße Differenzialdosierwaage verknüpft somit das Differenzialwaagenprinzip mit einer Massestrommesseinrichtung. Dies erhöht die Kosten für die erfindungsgemäße Differenzialdosierwaage nur unwesentlich, schafft aber einen deutlichen Nutzen für den Anwender.

Weitere Merkmale und Vorteile der Erfindung ergeben sich aus der nachfolgenden Beschreibung bevorzugter Ausführungsformen unter Bezugnahme auf die Zeichnungen. In den Zeichnungen . zeigen:
- Fig. 1: eine schematische Skizze einer ersten bevorzugten Ausführungsform einer erfindungsgemäßen Differenzialdosierwaage zur Durchführung eines erfindungsgemäßen Verfahrens zur gravimetrischen Masse-Dosierung,
- Fig. 2: eine schematische Skizze einer ersten bevorzugten Ausführungsform einer Massestrommesseinrichtung innerhalb einer erfindungsgemäßen Differenzialdosierwaage zur Durchführung eines erfindungsgemäßen Verfahrens zur gravimetrischen Masse-Dosierung,
- Fig. 3: eine schematische Skizze einer zweiten bevorzugten Ausführungsform einer erfindungsgemäßen Differenzialdosierwaage zur Durchführung eines erfindungsgemäßen Verfahrens zur gravimetrischen Masse-Dosierung,
- Fig. 4: eine schematische Skizze einer dritten bevorzugten Ausführungsform einer Massestrommesseinrichtung innerhalb einer erfindungsgemäßen Differenzialdosierwaage zur Durchführung eines erfindungsgemäßen Verfahrens zur gravimetrischen Masse-Dosierung, und
- Fig. 5: eine schematische Skizze einer Differenzialdosierwaage nach dem Stand der Technik.

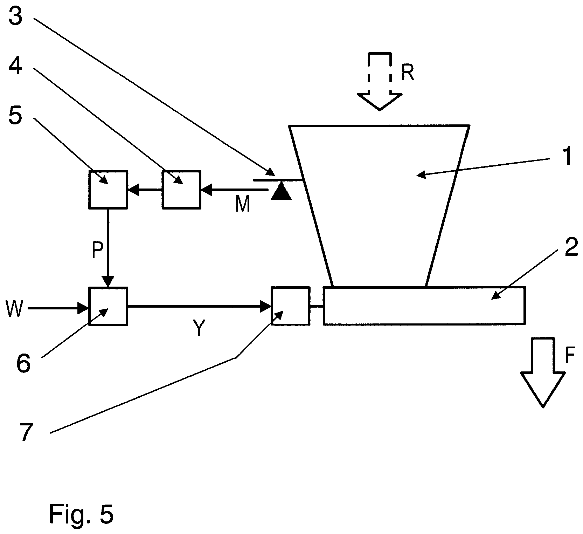

Nachfolgend wird zunächst anhand der Fig. 5 kurz auf eine Differenzialdosierwaage nach dem Stand der Technik eingegangen, und darauf basierend bevorzugte Ausführungsformen beschrieben, um die erfindungsgemäßen Unterschiede zum Stand der Technik einfacher und prägnanter zu verdeutlichen. Es sei darauf hingewiesen, dass hierzu gleiche oder gleich wirkende Komponenten in den Figuren mit denselben Bezugszeichen belegt sind.

Eine wie in Fig. 5 skizzierte Differenzialdosierwaage der bekannten Bauart zur kontinuierlichen Dosierung von Schüttgut besitzt einen Behälter 1 mit dem zu dosierenden Schüttgut und einer volumetrischen Austrags- bzw. Fördereinrichtung 2, mit der das Schüttgut mit einem Austragsstrom F, der zeitlich einem Sollwert W folgt, ausgetragen bzw. aus dem Behälter 1 kommend abgefördert wird. Eine Austragseinrichtung wird daher in der gesamten Beschreibung und in den Ansprüchen gleichbedeutend auch als Fördereinrichtung bezeichnet. Zur Ermittlung des Austragsstroms F, in der gesamten Beschreibung und in den Ansprüchen gleichbedeutend auch als Förderstrom oder Massestrom bezeichnet, wird das Gesamtgewicht einer aus Behälter 1 sowie hierbei umfasstem Schüttgut oder aus Behälter 1 und Austragseinrichtung 2 sowie hierbei umfasstem Schüttgut gebildeten Einheit über eine Gewichtserfassungseinheit 3 ermittelt. Ein dieses Gesamtgewicht repräsentierendes Signal M wird anschließend von der Gewichtserfassungseinheit 3 an eine Differenziereinheit 4 übergeben und von der Differenziereinheit 4 differenziert. Ein am Ausgang der Differenziereinheit 4 daraufhin bereitgestelltes Signal wird an eine Filtereinheit 5 übergeben, in welcher das von der Differenziereinheit 4 übergebende Signal nach zumindest einem Algorithmus, zweckmäßig nach diversen Algorithmen gefiltert wird, um ein möglichst gut dem tatsächlichen Förderstrom F entsprechendes Signal P zu errechnen. Dieses nachfolgend als Massestrom repräsentierendes erstes Signal bezeichnete Signal P und ein Sollwert W für die Förderstärke wird einer Regeleinrichtung 6 zugeführt. Diese Regeleinrichtung 6 errechnet aus dem den Massestrom repräsentierenden ersten Signal P und dem Sollwert W ein Stellsignal Y.

Das Stellsignal Y wird einem Antrieb 7 der Austragseinrichtung 2 zugeführt. Damit wird der Volumenstrom der Austragseinrichtung 2 so eingestellt, dass der gravimetrische Ausgangsstrom F möglichst gut dem Sollwert W folgt.

Wenn der Behälter 1 einen unteren Grenzfüllstand erreicht hat, wird eine Befüllung R, auch als Nachfüllung R bezeichnet, eingeleitet, bis der Füllstand einen oberen Grenzfüllstand erreicht oder überschritten hat. In der Nachfüllzeit wird der Regler 6 so umgeschaltet, dass er das zum aktuell bestimmten Gesamtgewicht im Behälter passende Stellsignal Y ausgibt. Der Regelkreis für die Förderstärke ist somit während der Nachfüllung unterbrochen, d.h. Änderungen der Schüttgutdichte in der Austragseinrichtung 2 führen in dieser Zeit der Nachfüllung zu Abweichungen des Förderstroms F vom Sollwert W.

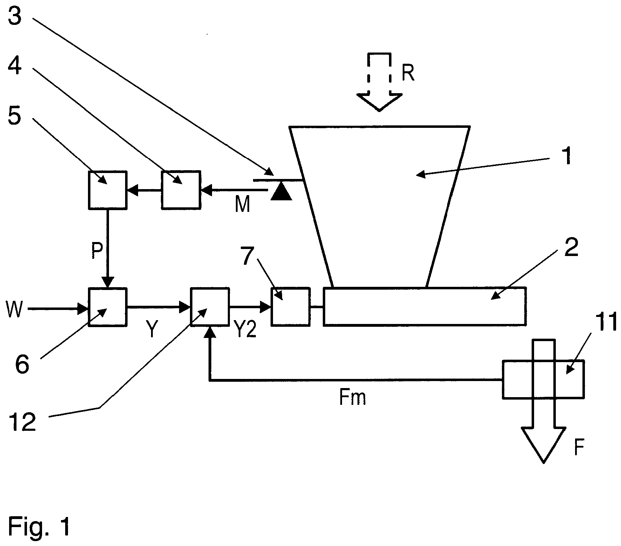

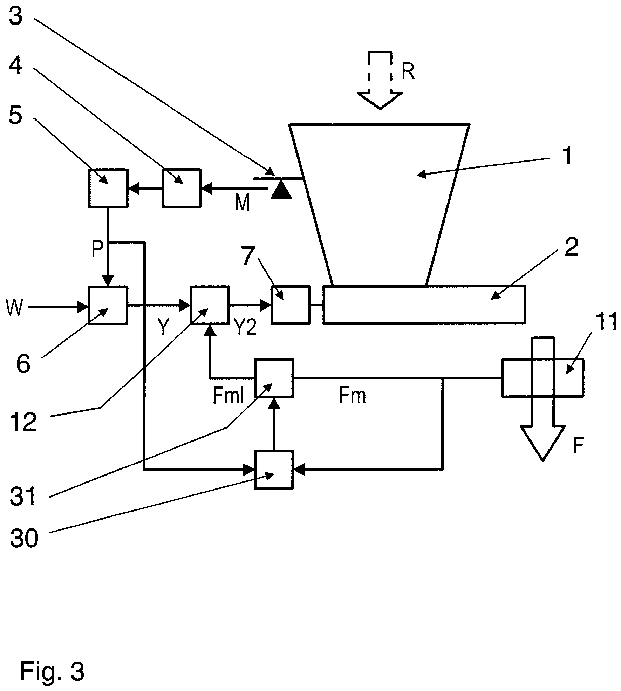

Auch die Erfindung sieht nunmehr ein Verfahren vor, zur gravimetrischen Masse-Dosierung von Schüttgut mittels einem Behälter 1 mit dem zu dosierenden Schüttgut und einer volumetrischen Fördereinrichtung 2, mit der das Schüttgut mit einem Massestrom F, der zeitlich einem Sollwert W für eine Soll-Förderstärke folgt, vom Behälter kommend abgefördert wird, wobei z.B. gemäß der Ausführungsformen nach Figur 1 und 3 zur Ermittlung dieses Massestroms F ein Signal M ermittelt wird, welches das Gesamtgewicht einer aus Behälter 1 sowie hierbei umfasstem Schüttgut oder aus Behälter 1 und Austragseinrichtung 2 sowie hierbei umfasstem Schüttgut gebildeten Einheit repräsentiert, das Signal M anschließend Anlagen- und/oder Schüttgut-spezifisch verarbeitet, insbesondere differenziert und gefiltert wird, um ein den Massestrom repräsentierendes erstes Signal P zu berechnen, aus welchem zusammen mit dem Sollwert W für die Soll-Förderstärke ein erstes Stellsignal Y berechnet wird.

Zweckmäßig besitzt hierzu eine von der Erfindung bereitgestellte und zur Durchführung dieses Verfahrens geeignete Differenzialdosierwaage den Behälter 1 mit dem zu dosierenden Schüttgut und die volumetrische Fördereinrichtung 2, mit der das Schüttgut mit einem Massestrom F, der zeitlich einem Sollwert W für eine Soll-Förderstärke folgt, vom Behälter kommend abgefördert wird. Ferner besitzt die Differenzialdosierwaage eine Gewichtserfassungseinheit 3 und eine Differenzialfiltereinrichtung, welche ferner eine erste Regeleinrichtung 6 umfasst, wobei die Gewichtserfassungseinheit 3 ausgebildet ist, zur Ermittlung des Gesamtgewichts einer aus Behälter 1 sowie hierbei umfasstem Schüttgut oder aus Behälter 1 und Austragseinrichtung 2 sowie hierbei umfasstem Schüttgut gebildeten Einheit, und ein dieses Gesamtgewicht repräsentierende Signal M ausgibt und an die Differenzialfiltereinrichtung übergibt, und wobei die Differenzialfiltervorrichtung ausgebildet ist um aus dem Signal M über eine Gewichtsveränderung pro Zeit, ein den Massestrom repräsentierendes erstes Signal P zu berechnen. Aus dem den Massestrom repräsentierenden ersten Signal P und dem Sollwert W für die Förderstarke berechnet ein Regler 6 ein erstes Stellsignal Y.

Gemäß den Ausführungsformen nach Figur 1 und 3, umfasst die Differenzialfiltereinrichtung zweckmäßig eine Differenziereinheit 4 und eine Filtereinheit 5. Die Differenziereinheit 4 differenziert das von der Gewichtserfassungseinheit 3 ausgegebene Signal M übergibt dieses differenzierte Signal der Filtereinheit 5, welche das übergebende Signal nach zumindest einem Algorithmus filtert, um das den Förderstrom repräsentierende erste Signal P zu berechnen. Damit das berechnete Signal P bereits möglichst gut dem tatsächlichen Förderstrom F entspricht, filtert die Filtereinheit 5 zweckmäßig nach diversen Algorithmen. Die erste Regeleinrichtung 6 errechnet schließlich aus dem den Massestrom repräsentierenden ersten Signal P und einem Sollwert W für die Förderstarke das erste Stellsignal Y. Die erste Regeleinrichtung 6 kann als PI-Regler ausgeführt werden, kann aber auch in anderen Ausprägungen grundsätzliche jede Form eines Reglers oder Stellers enthalten, die ein für eine jeweilige Differenzialdosierwaage geeignetes erstes Stellsignal Y errechnen kann.

Im Gegensatz zum Stand der Technik wird gemäß der Erfindung dieses erste Stellsignal Y jedoch nicht direkt dem Antrieb 7 der Austragseinrichtung 2 zugeführt.

Gemäß der Erfindung ist hingegen vorgesehen, dass nach Verlassen des Massestroms F der Fördereinrichtung 2 ein den Massestrom F repräsentierendes, zweites Signal Fm gemessen wird, und basierend auf dem den Massestrom F repräsentierenden zweiten Signal Fm und dem ersten Stellsignal Y ein zweites Stellsignal Y2 berechnet und einem Antrieb 7 der Fördereinrichtung 2 zur Steuerung der Fördereinrichtung 2 zugeführt wird.

Gemäß der Erfindung ist die Differenzialdosierwaage hierfür durch eine zweite Regeleinrichtung 12 und eine Massestrommesseinrichtung 11, welche nachfolgend auch als Förderstrommesseinrichtung bezeichnet ist, erweitert. Die Massestrommesseinrichtung 11 ist derart ausgebildet und angeordnet, dass das Schüttgut nach dem Verlassen der Fördereinrichtung 2, und also der Förderstrom bzw. Massestrom F durch diese Massestrommesseinrichtung 11 hindurch laufen kann, wobei die Massestrommesseinrichtung 11 ein den Massestrom repräsentierendes zweites Signal Fm berechnet. Die zweite Regeleinrichtung 12 erhält als Sollwert das von der ersten Regeleinrichtung 6 ermittelte erste Stellsignal Y und errechnet basierend auf dem den Massestrom repräsentierenden zweiten Signal Fm und dem ersten Stellsignal Y ein zweites Stellsignal Y2. Gemäß Ausführungsform nach Fig. 1 führt die Massestrommesseinrichtung 11 der zweiten Regeleinrichtung 12 hierfür das den Massestrom repräsentierende zweite Signal Fm zu. Das zweite Stellsignal Y2 wird dem Antrieb 7 der Fördereinrichtung 2 zur Steuerung der Fördereinrichtung 2 und also zur Einstellung des zu fördernden Massestroms F zugeführt.

Die zweite Regeleinrichtung 12 ist somit zweckmäßig zwischen der ersten Regeleinrichtung 6 und dem Antrieb 7 der Fördereinrichtung 2 angeordnet. Es sei jedoch darauf hingewiesen, dass die zweite Regeleinrichtung 12 auch ausgangsseitiger Bestandteil der ersten Regeleinrichtung 6 sein kann.

Rein regelungstechnisch betrachtet, nutzt die Erfindung somit eine aus anderen technischen Anwendungen bekannte Kaskadierung zweier Regelkreise.

An die Förderstrom- bzw. Massestrommesseinrichtung 11 müssen in vorteilhafter Weise keine hohen Anforderungen bezüglich der Genauigkeit gestellt werden, da die Regelung des Förderstroms übergeordnet durch die erste Regeleinrichtung 6 erfolgt.

Zweckmäßig sollte jedoch gewährleistet sein, dass das Signal Fm keinen übermäßigen Fehlerschwankungen unterliegt, welche in der zweiten Regeleinrichtung 12 zu Instabilitäten führen könnten.

Signaländerungen im Signal Fm, welche auf sich langsam ändernden Messfehler der Massestrommesseinrichtung 11 basieren, die z.B. durch Temperaturänderungen und/oder Feuchteänderungen bedingt sein können, werden über den überlagerten Regelkeis und Regler 6 eliminiert.

Schnelle Änderungen im Massestrom können dagegen effektiv und schnell in der zweiten Regeleinrichtung 12 einer Ausführungsvariante gemäß Fig. 1 ausgeregelt werden.

Das Messsignal Fm muss mit dem realen Massestrom F monoton steigen oder monoton fallen. Eine gleichbleibende Steilheit dFm/dF ist nicht zwingend erforderlich, erleichtert aber die Arbeit der Regeleinrichtungen 6 und 12. Auch ist eine genaue Justage der Massestrommesseinrichtung 11 nicht erforderlich.

Wenn das Messsignal Fm dem tatsachlichen Massestrom F deutlich schneller folgt als das Signal P, kann wie oben beschrieben auch die Dynamik des gesamten Systems beschleunigt werden, mit der Folge, dass der tatsachliche Massestrom F dem Sollwert W deutlich schneller folgt. Bei konstantem Sollwert W wird somit die Dosierkonstanz als Standardabweichung des Massestrom F deutlich reduziert, was einen wesentlichen Vorteil darstellt, wenn der Massestrom F einem nachfolgenden Prozess zugeführt wird, der Veränderungen im Massestrom nicht tolerieren kann.

In jedem Fall wird folglich auch während der Be- bzw. Nachfüllung R die Förderstärke ermittelt und geregelt. Schnelle Änderungen der Schüttgutdichte in der Austragseinrichtung 2 führen somit nicht zu Fehlern im gravimetrischen Massestrom F.

Wegen der reduzierten Genauigkeits-Anforderung an die Massestrommesseinrichtung 11 kann diese also sehr einfach aufgebaut werden. Selbstverständlich können auch bekannte Massestrommesseinrichtungen, vgl. z.B. auch Vetter: "Handbuch Dosieren", ISBN 3-8027-2199-3; Kapitel "Durchlaufdosiergeräte für Schüttgüter", mit erhöhter Genauigkeit eingesetzt werden. Dies ist insbesondere dann von Interesse, wenn die Nachfüllphase relativ lange dauert und so die Anforderungen an die Messwert-Stabilität der Massestrommesseinrichtung 11 steigen.

Es ist ferner vorteilhaft, die Massestrommesseinrichtung 11 möglichst dicht unter einem für den Massestrom vorgesehenen Abwurfort der Fördereinrichtung 2 zu installieren, damit vom Verlassen der Fördereinrichtung 2 bis zur Ermittlung des Messsignals Fm nur eine kurze Zeit vergeht. Damit ist die Dynamik der Reglung über die zweite Regeleinrichtung 12 optimiert, d. h. sie kann mit noch höherer Dynamik eingestellt werden.

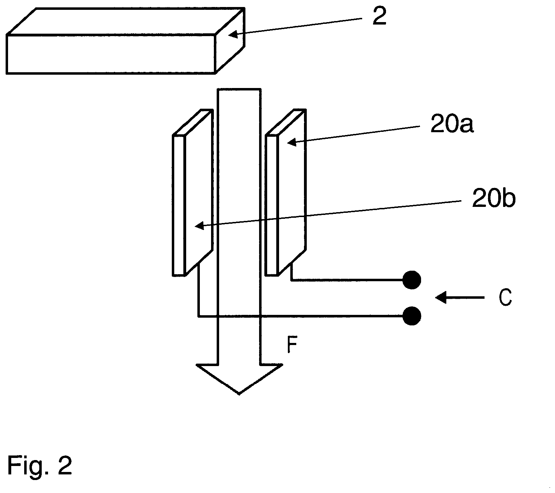

Erfindungsgemäß kann eine sehr einfache Massestrommesseinrichtung 11 derart ausgebildet sein, dass sie das den Massestrom F repräsentierende zweite Signal Fm anhand einer von der Schüttgutdichte zwischen Elektroden abhängigen Kapazität C ermittelt. Gemäß der skizzierten Ausführungsform nach Fig. 2 z.B., wird der Massestrom F aus der Austragseinrichtung 2 durch eine Einrichtung mit zwei Elektroden 20a und 20b geleitet. Die Elektroden 20a und 20b sind z.B. als Plattenartige Elektroden ausgebildet. Die Kapazität C des aus den beiden Elektroden 20a und 20b gebildeten elektrischen Kondensators kann nach bekannten Verfahren ermittelt werden, wobei vorteilhaft die Impedanz des aus den Elektroden 20a und 20b gebildeten Kondensators für hochfrequente Signale ermittelt wird, um hieraus die Kapazität zu errechnen. Da die Kapazität ferner abhängig von der relativen Dielektrizitätskonstanten εᵣ des Materials zwischen den Elektroden 20a und 20b ist, haben Gebiete, in denen sich Schüttgut befindet, eine höhere relative Dielektrizitätskonstante εᵣ als Bereiche, in denen sich nur Luft befindet. Somit ist die Kapazität C abhängig von der Schüttgutmenge zwischen den Elektroden 20a und 20b.

Der Förderstrom F innerhalb der Förderstrommesseinrichtung 11 ergibt sich aus der Geschwindigkeit des Schüttguts und der Menge zwischen den Platten. Wird die Einrichtung bei konstantem Förderstrom betrieben, so ist die Fallgeschwindigkeit am Ort der Förderstrommesseinrichtung im freien Fall gleichbleibend. Da die Förderstrommesseinrichtung bei erfindungsgemäßem Einsatz keinen absolut genauen Messwert liefern muss, ergibt sich aus der ermittelten Kapazität C somit ein Signal Fm proportional dem Förderstrom.

Die Dielektrizitätskonstante des Schüttguts ist ferner weiterhin abhängig von verschiedenen Materialeigenschaften. Da sich diese Eigenschaften erfahrungsgemäß nur langsam ändern, liefert das Signal Fm für die Kapazität C also auch bei diesen Änderungen ein ausreichend kurzzeit-stabiles Maß für den Förderstrom.

Es ist ferner vorteilhaft, die Elektroden 20a und 20b dicht am Massestrom-Abwurfort der Austragseinrichtung 2 zu installieren, auch weil dort, wegen der noch geringen Fließgeschwindigkeit des Schüttguts, die Materialmenge und damit die relative Materialdichte in Luft und somit der Einfluss auf die Kapazität C besonders hoch ist.

Die Elektroden, somit auch die beiden Elektroden 20a und 20b des Kondensators können plan oder gebogen ausgeführt und somit an den sich an den Massestrom-Abwurfort anschließenden Bereich, wobei dies in der Regel ein Abförder-Rohr ist, angepasst werden. Die Größe und Lage der Elektroden kann nach dem Fachmann bekannten Methoden vorteilhaft zweckmäßig so gewählt werden, dass die Kapazitätsänderung durch das Schüttgut möglichst groß wird. Gleichzeitig wird die Lage zweckmäßig so gewählt, dass der Förderstrom F des Schüttguts nicht behindert wird, es also auch nicht zur Verstopfung in dem Abförder-Bereich kommen kann.

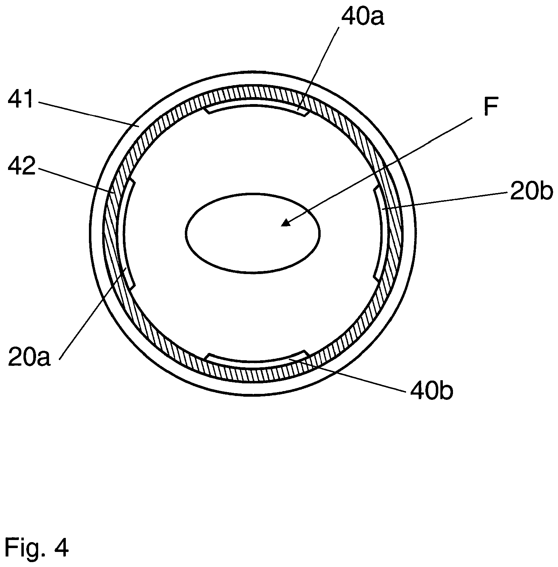

Weiterhin können weitere Elektrodenpaare so angeordnet werden, dass sie den durch die Massestrommesseinrichtung 11 durchquerenden Massestrom in einer anderen Richtung erfassen. Fig. 4 zeigt z.B. eine bevorzugte Ausführungsform einer entsprechenden Anordnung im horizontal liegenden Schnitt hinter dem Massestrom-Abwurfort der Austragseinrichtung 2 am Beispiel einer zylindrischen Anordnung innerhalb eines Abförder-Rohrs, d.h. zur Abförderung des Förderstroms F im sich an den Massestrom-Abwurfort anschließenden Bereich angeordneten Förderrohrs 41. In das dargestellte Förderrohr 41 ist ein dielektrisches Rohr 42 eingebracht, das das Elektrodenpaar 20a und 20b sowie ein weiteres Paar von Elektroden 40a und 40b trägt. Das elektrische Feld zwischen den Elektrodenpaaren erfasst den Förderstrom F in zwei unterschiedlichen horizontalen Richtungen. Die Messung der Kapazität C zwischen dem Elektrodenpaar 20a, 20b und der Kapazität C zwischen dem Elektrodenpaar 40a, 40b kann entweder zeitlich nacheinander bei der gleichen Frequenz oder gleichzeitig bei unterschiedlichen Frequenzen erfolgen. Der Messwert für das Signal Fm ergibt sich dann z.B. aus einer linearen Kombination der Messergebnisse für die beiden Kapazitäten C, wobei zweckmäßig jeweils die Differenz eines gemessenen Kapazitätswertes C zu einem Kapazitätswert in einem Referenzzustand verwendet wird.

Die Elektrodenpaare 20a, 20b und 40a, 40b können z.B. auch in Fließrichtung, d.h. in Durchlaufrichtung des Massestroms durch Massestrommesseinrichtung 11, vertikal versetzt angeordnet werden. Zusätzlich kann bei einer Anordnung mit mehreren Elektrodenpaaren, z.B. auch nach Fig. 4, auch die Kapazität zwischen benachbarten Elektrodenpaaren gemessen werden und zur Ermittlung des Gesamtmesswerts Fm mittels tomographischer Methoden entsprechend herangezogen werden. Grundsätzlich verbessert die Erhöhung der Anzahl der Elektroden zwar die absolute Genauigkeit einer als Durchflussmessgeräts ausgebildeten Massestrommesseinrichtung und somit auch der Massestrommesseinrichtung 11, erhöht aber auch die Komplexität und die Kosten. Da die absolute Genauigkeit, wie oben ausgeführt, bei der Massestrommesseinrichtung 11 aber nicht von entscheidender Bedeutung ist, liegt das Optimum eher bei einer geringen Anzahl von Elektroden.

Alternativ zur Auswertung an mehreren Elektroden, kann z.B. eine oder auch mehrere Elektroden, insbesondere ein Elektrodenpaar, auch mechanisch um den Förderstrom F im Zentrum herum gedreht werden, um ihn in mehreren Richtungen zu erfassen.

Die erfindungsgemäß eingesetzten Elektroden können ferner an der verwogenen Einheit der erfindungsgemäßen Differenzialdosierwaage, d.h. an der Einheit, deren Gesamtgewicht von der Gewichtserfassungseinheit 3 ermittelt wird, oder, um Kraftnebenschlusse über die Zuleitungen zu minimieren, an einer nicht verwogenen Einheit der Differenzialdosierwaage befestigt sein.

Eine weitere Verbesserungsmöglichkeit besteht darin, ein weiteres Elektrodenpaar mit einer Kapazität C2 in ähnlicher Bauart wie die Messelektroden 20a und 20b in der Nähe der Messelektroden anzuordnen, wobei das zusätzliche Elektrodenpaar nicht vom Förderstrom F durchflossen wird. Dieses zusätzliche Elektrodenpaar ist dann den selben Umwelteinflüssen eingesetzt wie das Mess-Elektrodenpaar 20a und 20b. Die Differenz aus den Kapazitäten C und C2 liefert dann ein um die Umwelteinflusse reduziertes Signal Fm für den Förderstrom durch die Förderstrommesseinrichtung 11.

Erfindungsgemäß kann die einfache Förderstrommesseinrichtung 11 auch andere physikalische Eigenschaften des Massestroms erfassen, wenn diese zumindest kurzzeitig in einem festen Zusammenhang zur Dichte bzw. Masse des Schüttguts stehen. In Frage kommen z.B. die Auswertung von Parametern der Schallleitung durch das Schüttgut des Förderstroms und/oder des Lichtdurchgangs bzw. der Licht-Absorption, und/oder die Auswertung magnetischer Eigenschaften bei ferromagnetischen Schüttgütern und/oder die Auswertung des Übertragungsverhaltens für elektromagnetische Mikrowellen und/oder atomare Teilchen. Eine Vielzahl solcher Messmethoden für Materialeigenschaften sind dem Fachmann in dem jeweiligen Fachgebiet bekannt. Auch geeignete Anordnungen der zur Messung anderer physikalischer Eigenschaften des Schüttguts notwendigen Sensoren sind dem jeweiligen Fachmann bekannt. Prinzipiell können alle in der Einleitung beschriebenen Messgeräte für Massenströme zum Einsatz kommen, wobei das Optimum bei den einfachen Geräten liegt.

Ähnlich wie bei den in Fign. 2 oder 4 beschriebenen Massestrommesseinrichtungen 11 werden die Sensoren dabei so angebracht, dass das Schüttgut und also der Förderstrom F durch ihren Messbereich fließt.

Wenn auch nicht zwingend notwendig, wie bereits vorstehend beschrieben, so ist es doch insbesondere bei Sollwertänderungen ferner hilfreich, wenn die Massestrommesseinrichtung 11 nicht zu große Tara- und Bereichsfehler aufweist. Daher führt eine Justage der Massestrommesseinrichtung 11 zu einer weiteren Verbesserung des Führungsverhaltens bei veränderlichem Sollwert W.

Nach dem Stand der Technik vgl. z.B. Vetter: "Handbuch Dosieren", ISBN 3-8027-2199-3; Kapitel "Dosierbandwaage mit automatischer Kontroll- und Korrektureinrichtung", werden Durchflusssensoren häufig dadurch kalibriert, dass das durch den Sensor geflossene Schüttgut in einem Behälter gesammelt wird. Angewendet auf die Erfindung, kann somit zur Justage der Massestrommesseinrichtung 11 die Gewichtsdifferenz zwischen dem nach Durchlaufen der Massestrommesseinrichtung 11 in einem zusätzlichen Behälter gesammelten Schüttgut und dem Integral des von der Massestrommesseinrichtung 11 bestimmten Schüttgutflusses zur Korrektur des Messergebnisses des Massenstrommessers 11 herangezogen werden (in den Figuren nicht dargestellt).
Zur Justage der Massestrommesseinrichtung 11 kann jedoch z.B. auch die aus dem Behälter 1 abgezogene und durch die Massestrommesseinrichtung 11 geförderte Materialmenge mit der durch die Massestrommesseinrichtung 11 bestimmten Menge verglichen und die Massestrommesseinrichtung 11 entsprechend kalibriert werden (in den Figuren nicht dargestellt).

Dieses Verfahren benötigt jedoch immer eine ausreichend große Schüttgutmenge, damit der Messfehler bei der Bestimmung der Menge über die Gewichtsdifferenz am Behälter 1 ausreichend klein wird. Somit kann die Massestrommesseinrichtung 11 nur in größeren Intervallen überprüft und nachkalibriert werden. Zudem liefert das Verfahren nur einen Messwert pro Messintervall, so dass die gleichzeitige Korrektur von Tara-und Bereichsfehlern der Massestrommesseinrichtung 11 aus einer Messung prinzipiell nicht möglich ist. Zur Korrektur beider Werte sind folglich mindestens zwei Messungen bei unterschiedlichen Förderstärken notwendig.

Eine vergleichbare, erfindungsgemäß bevorzugte Justage kann jedoch auch permanent erfolgen. Dazu kann z.B. gemäß der in Fig. 3 dargestellten Ausführungsform der Erfindung, das Signal P der Differenzialdosierwaage und das Signal Fm der Massestrommesseinrichtung einer zusätzlichen Identifikationseinrichtung 30 der Differenzialdosierwaage zugeführt werden. Die Identifikationseinrichtung 30 ermittelt einen statischen Zusammenhang aus den beiden Signale P und Fm für verschiedene Massenströme, z.B. nach dem Fachmann bekannten Identifikations-Methoden, wobei dieser zweckmäßig in einer Kennlinie gespeichert wird. Der so ermittelte Zusammenhang kann dann kann einer zusätzlichen Korrektureinrichtung 31 der Differenzialdosierwaage zugeführt werden. Zusätzlich wird der Korrektureinrichtung 31 das aktuelle, den Massestrom repräsentierende zweite Signal Fm zugeführt, und der ermittelte Zusammenhang kann dann dazu verwendet werden, dass die Korrektureinrichtung 31 das aktuelle Signal Fm linearisiert bzw. justiert. Der Regeleinrichtung 12 wird daraufhin erst nach Linearisierung bzw. Justierung des den Massestrom F repräsentierenden zweiten Signals Fm ein den Massestrom F repräsentierendes zweites, jedoch linearisiertes bzw. justiertes Signal Fml zugeführt. Die zweite Regeleinrichtung 12 errechnet somit basierend auf diesem den Massestrom F repräsentierenden zweiten, jedoch linearisierten bzw. justierten Signal Fml und dem ersten Stellsignal Y das zweite Stellsignal Y2.

Eine Ausführungsform des erfindungsgemäßen Verfahrens gemäß Fig. 3 arbeitet während der gesamten gravimetrischen Dosierphase der Differenzialdosierwaage und stellt so zu jedem Zeitpunkt die korrekte Erfassung des Schüttgutstroms und die integrale Genauigkeit der Dosierung sicher. Die nach der Korrektur über die Korrektureinrichtung 31 verbleibenden Tara-und Bereichsfehler der Massestrommesseinrichtung 11 werden automatisch durch die übergeordnete Regeleinrichtung 6 ausgeregelt. Eine gesonderte Aufteilung auf die beiden Fehlerursachen ist nicht erforderlich.

### Bezugszeichenliste:

- 1: Behälter;
- 2: volumetrische Förder- bzw. Austragseinrichtung;
- 3: Gewichtserfassungseinheit;
- 4: Differenziereinheit;
- 5: Filtereinheit;
- 6: erste Regeleinrichtung;
- 7: Antrieb;
- 11: Massenstrom- bzw. Förderstrom messeinrichtung;
- 12: zweite Regeleinrichtung;
- 20a, 20b: Elekroden;
- 40a, 40b: Elekroden;
- 30: Identifikationseinrichtung;
- 31: Korrektureinrichtung;
- 41: Förderrohr;
- 42: dielektrisches Rohr;
- C, C2: Kapazitäten;
- F: Förderstrom/Austragsstrom/Massestrom;
- Fm: Massestrom repräsentierendes zweites Signal;
- Fml: Massestrom repräsentierendes zweites, jedoch linearisierte bzw. justierte Signal;
- M: Gesamtgewicht repräsentierendes Signal;
- P: Massestrom repräsentierendes erstes Signal;
- R: Befüllung/Nachfüllung;
- W: Sollwert;
- Y: erstes Stellsignal;
- Y2: zweites Stellsignal;
- εᵣ: relative Dielektrizitätskonstante;

## Patentansprüche

1. Verfahren zur gravimetrischen Masse-Dosierung von Schüttgut mittels Differenzialdosierwaage umfassend einen Behälter (1)mit dem zu dosierenden Schüttgut und eine volumetrischen Fördereinrichtung (2),
- mit der das Schüttgut mit einem Massestrom (F) vom Behälter kommend abgefördert wird,:
- wobei der Massestrom zeitlich einem Sollwert (W) für eine Soll-Förderstärke folgt,
- wobei zur Ermittlung dieses Massestroms (F) ein Signal (M) ermittelt wird,
- - welches das Gesamtgewicht einer aus Behälter (1) sowie hierbei umfasstem Schüttgut oder
- - - aus Behälter (1) und Fördereinrichtung (2) sowie hierbei umfasstem Schüttgut gebildeten Einheit repräsentiert,
- das Signal (M) anschließend Anlagen- und/oder Schüttgut-spezifisch verarbeitet wird, um ein den Massestrom repräsentierendes erstes Signal (P) zu berechnen,
- aus welchem zusammen mit dem Sollwert (W) für die Soll-Förderstärke von einer ersten Regeleinheit (6) ein erstes Stellsignal (Y) berechnet und einem Antrieb (7) der Fördereinrichtung (2) zugeführt wird, **dadurch gekennzeichnet, dass** der Massestrom (F) nach Verlassen der Fördereinrichtung (2) durch eine Massestrommesseinrichtung (11) hindurchläuft und von der Massestrommesseinrichtung (11) ein den Massestrom (F) repräsentierendes, zweites Signal (Fm) gemessen wird, und basierend auf dem den Massestrom (F) repräsentierenden zweiten Signal (Fm) und dem ersten Stellsignal (Y) von einer zweiten Regeleinheit (12) ein zweites Stellsignal (Y2) berechnet und dem Antrieb (7) der Fördereinrichtung (2) zur Steuerung der Fördereinrichtung (2) zugeführt wird.

2. Verfahren nach Anspruch 1, wobei das den Massestrom (F) repräsentierende Signal (Fm) mit der Größe des Massestrom (F) monoton steigt oder monoton fällt.

3. Verfahren nach Anspruch 1 oder 2, wobei das den Massestrom (F) repräsentierende zweite Signal (Fm) dem tatsachlichen Massestrom (F) schneller folgt als das aus dem Signal (M) berechnete den Massestrom repräsentierende erste Signal (P).

4. Verfahren nach einem der vorstehenden Ansprüche, wobei das den Massestrom (F) repräsentierende zweite Signal (Fm) anhand einer von der Schüttgutdichte zwischen Elektroden (20a, 20b, 40a, 40b) abhängigen Kapazität (C) ermittelt wird.

5. Verfahren nach einem der vorstehenden Ansprüche, wobei ein statischer Zusammenhang zwischen dem aus dem Signal (M) berechneten, das den Massestrom repräsentierende erste Signal (P) und dem den Massestrom (F) repräsentierenden zweiten Signal (Fm) für verschiedene Massenströme ermittelt wird und der ermittelte Zusammenhang dazu verwendet wird, das den Massestrom (F) repräsentierende zweite Signal (Fm) erst zu linearisieren oder zu justieren und erst nach Linearisierung oder Justierung des den Massestrom (F) repräsentierenden zweiten Signals (Fm) aus diesem linearisierten oder justierten Signal (Fml) und dem ersten Stellsignal (Y) das zweite Stellsignal (Y2) zu berechnen.

6. Differenzialdosierwaage mit einem Behälter (1) mit dem zu dosierenden Schüttgut und einer volumetrischen Fördereinrichtung (2)
- mit der das Schüttgut mit einem Massestrom (F) vom Behälter kommend abgefördert wird,
- wobei der Massestrom zeitlich einem Sollwert (W) für eine Soll-Förderstärke folgt,
- einer Gewichtserfassungseinheit (3) und eine Differenzialfiltereinrichtung, welche eine erste Regeleinrichtung (6) umfasst,
- wobei die Gewichtserfassungseinheit (3) zur Ermittlung des Gesamtgewichts einer aus Behälter (1) sowie hierbei umfasstem Schüttgut oder
- aus Behälter (1) und Fördereinrichtung (2) sowie hierbei umfasstem Schüttgut gebildeten Einheit ausgebildet ist,
- und ein dieses Gesamtgewicht repräsentierende Signal (M) ausgibt und an die Differenzialfiltereinrichtung übergibt,
- und wobei die Differenzialfiltervorrichtung ausgebildet ist, aus dem Signal (M) das den Massestrom repräsentierende erste Signal (P) zu berechnen und aus dem den Massestrom repräsentierenden ersten Signal (P) und dem Sollwert (W) für die Förderstarke ein erstes Stellsignal (Y) zu berechnen, **gekennzeichnet durch**, eine zweite Regeleinrichtung (12) und eine Massestrommesseinrichtung (11), wobei die Massestrommesseinrichtung (11) derart ausgebildet und angeordnet ist, dass das Schüttgut nach dem Verlassen der Fördereinrichtung (2) durch diese Massestrommesseinrichtung (11) hindurch laufen kann und die Massestrommesseinrichtung (11) ein den Massestrom repräsentierendes zweites Signal (Fm) berechnet, und wobei die zweite Regeleinrichtung (12) basierend auf dem den Massestrom repräsentierenden zweiten Signal (Fm) und dem ersten Stellsignal (Y) ein zweites Stellsignal (Y2) errechnet und dieses einem Antrieb (7) der Fördereinrichtung (2) zur Steuerung der Fördereinrichtung (2) zuführt.

7. Differenzialdosierwaage nach Anspruch 6, wobei die Differenzialfiltervorrichtung ferner eine Differenziereinheit (4), eine Filtereinheit (5) umfasst, wobei die Differenziereinheit (4) das von der Gewichtserfassungseinheit (3) ausgegebene Signal (M) differenziert,
die Filtereinheit (5) das differenzierte Signal nach zumindest einem Algorithmus filtert, um das den Massestrom repräsentierende erste Signal (P) zu berechnen, und die erste Regeleinrichtung (6) aus dem den Massestrom repräsentierenden ersten Signal (P) und dem Sollwert (W) für die Förderstärke das erste Stellsignal (Y) errechnet.

8. Differenzialdosierwaage nach Anspruch 6 oder 7, wobei die Massestrommesseinrichtung (11) unter dem Massestrom-Abwurfort der Fördereinrichtung (2) installiert ist und in Abhängigkeit von der Entfernung zwischen Massestrommesseinrichtung (11) und Massestrom-Abwurfort die Dynamik der Reglung über die zweite Regeleinrichtung (12) manipulierbar ist.

9. Differenzialdosierwaage nach Anspruch 6, 7 oder 8, wobei
die Massestrommesseinrichtung (11) ausgebildet ist, das den Massestrom (F) repräsentierende zweite Signal (Fm) anhand einer von der Schüttgutdichte zwischen Elektroden (20a, 20b, 40a, 40b) abhängigen elektrischen Kapazität (C) zu ermitteln.

10. Differenzialdosierwaage nach Anspruch 9, wobei die Elektroden (20a, 20b, 40a, 40b) an der verwogenen Einheit oder an einer nicht verwogenen Einheit der Differenzialdosierwaage befestigt sind und wobei die Elektroden (20a, 20b, 40a, 40b) plan oder gebogen ausgeführt sind und/oder den Massestrom in jeweils anderen Richtungen erfassen und/oder in Durchlaufrichtung des Massestroms durch Massestrommesseinrichtung (11) vertikal versetzt angeordnet sind und/oder mechanisch um den Massestrom (F) herum drehbar sind.

11. Differenzialdosierwaage nach einem der Ansprüche 6 bis 8, wobei die Massestrommesseinrichtung (11) eine an sich bekannte Einrichtung zur Durchflussmessung von Schüttgütern ist.

12. Differenzialdosierwaage nach einem der Ansprüche 6 bis 11, wobei die Massestrommesseinrichtung (11) ausgebildet ist, auch Parameter der Schallleitung durch das Schüttgut des Massestroms und/oder des Lichtdurchgangs oder der Licht-Absorption auszuwerten und/oder magnetische Eigenschaften bei ferromagnetischen Schüttgütern auszuwerten und/oder das Übertragungsverhalten für elektromagnetische Mikrowellen und/oder atomare Teilchen auszuwerten.

13. Differenzialdosierwaage nach einem der Ansprüche 6 bis 12, ferner umfassend eine Identifikationseinrichtung (30) und eine Korrektureinrichtung (31),
wobei die Identifikationseinrichtung (30) ausgebildet und angeordnet ist, einen statischen Zusammenhang aus dem den Massestrom repräsentierenden ersten Signal (P) und dem den Förderstrom repräsentierenden zweiten Signal (Fm) für verschiedene Masseströme zu ermitteln, und wobei die Korrektureinrichtung (31) ausgebildet und angeordnet ist, basierend auf dem ermittelten Zusammenhang das den Förderstrom repräsentierende zweite Signal (Fm) zu linearisieren oder zu justieren und der zweiten Regeleinrichtung (12) erst nach Linearisierung oder Justierung des den Massestrom (F) repräsentierenden zweiten Signals (Fm) ein den Massestrom (F) repräsentierendes zweites, jedoch linearisiertes oder justiertes Signal (Fml) zuzuführen, so dass die zweite Regeleinrichtung (12) erst basierend auf diesem den Förderstrom (F) repräsentierenden zweiten, jedoch linearisierten oder justierten Signal (Fml) und dem ersten Stellsignal (Y) das zweite Stellsignal (Y2) errechnet.

## Claims

1. A method for the gravimetric mass metering of bulk solids via a differential metering scale comprising a container (1) with the bulk solid to be metered and a volumetric conveying device (2),
- with which the bulk solid coming from the container is conveyed with a mass flow (F),
- wherein the mass flow temporally follows a target value (W) for a target feed rate,
- wherein to determine said mass flow (F), a signal (M) is determined,
- - which represents the total weight of a unit formed by the container (1) and the bulk solid included hereby or
- - - by the container (1) and the conveying device (2) and the bulk solid included hereby,
- the signal (M) is then processed specifically for the system and/or bulk solid in order to calculate a first signal (P), representing the mass flow,
- from which, together with the target value (W) for the target feed rate, a first regulating unit (6) calculates a first control signal (Y) and provides it to a drive (7) of the conveying device (2), **characterized in that** the mass flow (F) after leaving the conveying device (2) passes through a mass flow measuring device (11) and a second signal (Fm), representing the mass flow (F), is measured by the mass flow measuring device (11) and, based on the second signal (Fm), representing the mass flow (F), and on the first control signal (Y), a second control signal (Y2) is calculated by a second regulating unit (12) and provided to the drive (7) of the conveying device (2) for controlling the conveying device (2).

2. The method according to claim 1, wherein the signal (Fm), representing the mass flow (F), increases monotonically or decreases monotonically with the size of the mass flow (F).

3. The method according to claim 1 or 2, wherein the second signal (Fm), representing the mass flow (F), follows the actual mass flow (F) more rapidly than the first signal (P), calculated from the signal (M) and representing the mass flow.

4. The method according to one of the preceding claims, wherein the second signal (Fm), representing the mass flow (F), is determined from a capacitance (C) dependent on the bulk solid density between the electrodes (20a, 20b, 40a, 40b).

5. The method according to one of the preceding claims, wherein a static relationship between the first signal (P), calculated from the signal (M) and representing the mass flow, and the second signal (Fm), representing the mass flow (F), is determined for different mass flows, and the determined relationship is used first to linearize or to adjust the second signal (Fm), representing the mass flow (F), and only after the linearization or adjustment of the second signal (Fm), representing the mass flow (F), to calculate the second control signal (Y2) from this linearized or adjusted signal (Fm1) and from the first control signal (Y).

6. A differential metering scale comprising a container (1) with the bulk solid to be metered and a volumetric conveying device (2)
- with which the bulk solid coming from the container is conveyed with a mass flow (F),
- wherein the mass flow temporally follows a target value (W) for a target feed rate,
- a weight determining unit (3) and a differential filter device, which comprises a first regulating device (6),
- wherein the weight determining unit (3) is configured to determine the total weight of a unit formed by the container (1) and the bulk solid included hereby or
- by the container (1) and the conveying device (2) and the bulk solid included hereby,
- and outputs a signal (M), representing this total weight, and transmits it to the differential filter device,
- and wherein the differential filter device is configured to calculate the first signal (P), representing the mass flow, from the signal (M) and to calculate a first control signal (Y) from the first signal (P), representing the mass flow, and from the target value (W) for the feed rate, **characterized by** a second regulating device (12) and a mass flow measuring device (11), wherein the mass flow measuring device (11) is configured and arranged such that the bulk solid after leaving the conveying device (2) can pass through said mass flow measuring device (11) and the mass flow measuring device (11) calculates a second signal (Fm), representing the mass flow, and wherein the second regulating device (12) calculates a second control signal (Y2) based on the second signal (Fm), representing the mass flow, and on the first control signal (Y) and supplies it to a drive (7) of the conveying device (2) for controlling the conveying device (2).

7. The differential metering scale according to claim 6, wherein the differential filter device further comprises a differentiation unit (4) and a filter unit (5), wherein the differentiation unit (4) differentiates the signal (M) output by the weight determining unit (3),
the filter unit (5) filters the differentiated signal according to at least one algorithm in order to calculate the first signal (P), representing the mass flow, and the first regulating device (6) calculates the first control signal (Y) from the first signal (P), representing the mass flow, and from the target value (W) for the feed rate.

8. The differential metering scale according to claim 6 or 7, wherein the mass flow measuring device (11) is installed below the mass flow dropping point of the conveying device (2) and, depending on the distance between the mass flow measuring device (11) and the mass flow dropping point, the dynamics of the closed loop control can be manipulated via the second regulating device (12).

9. The differential metering scale according to claim 6, 7, or 8, wherein
the mass flow measuring device (11) is configured to determine the second signal (Fm), representing the mass flow (F), from an electrical capacitance (C) dependent on the bulk solid density between the electrodes (11a, 20b, 40a, 40b).

10. The differential metering scale according to claim 9, wherein
the electrodes (20a, 20b, 40a, 40b) are attached to the weighed unit or to a non-weighed unit of the differential metering scale and wherein the electrodes (20a, 20b, 40a, 40b) are made planar or curved and/or detect the mass flow each in different directions and/or are arranged vertically offset in the pass-through direction of the mass flow through the mass flow measuring device (11) and/or are mechanically rotatable about the mass flow (F).

11. The differential metering scale according to one of claims 6 to 8, wherein the mass flow measuring device (11) is a device known per se for flow measuring of bulk solids.

12. The differential metering scale according to one of claims 6 to 11, wherein the mass flow measuring device (11) is configured to also evaluate parameters of sound conduction through the bulk solid of the mass flow and/or of light transmission or light absorption and/or to evaluate the magnetic properties in the case of ferromagnetic bulk solids and/or to evaluate the transmission behavior for electromagnetic microwaves and/or atomic particles.

13. The differential metering scale according to one of claims 6 to 12, further comprising an identification device (30) and a correction device (31),
wherein the identification device (30) is configured and arranged to determine a static relationship from the first signal (P), representing the mass flow, and from the second signal (Fm), representing the feed flow, for different mass flows, and wherein the correction device (31) is configured and arranged to linearize or to adjust the second signal (Fm), representing the feed flow, based on the determined relationship, and to supply a second, but linearized or adjusted signal (Fm1), representing the mass flow (F), to the second regulating device (12) only after the linearization or adjustment of the second signal (Fm), representing the mass flow (F), so that the second regulating device (12) calculates the second control signal (Y) only based on this second, but linearized or adjusted signal (Fm1), representing the feed flow (F), and on the first control signal (Y).

## Revendications

1. Procédé de dosage de masse gravimétrique d'un produit en vrac au moyen d'une balance de dosage différentiel comprenant un récipient (1) avec le produit en vrac à doser et un dispositif de convoyage volumétrique (2),
- avec lequel le produit en vrac est convoyée en provenance du récipient avec un débit massique (F),
- dans lequel le débit massique suivant de manière temporelle une valeur de consigne (W) pour un débit de convoyage de consigne,
- dans lequel, pour la détermination de ce débit massique (F), un signal (M) est déterminé,
- qui représente le poids total d'une unité constituée du récipient (1) ainsi que du produit en vrac qui y est contenu ou
- du récipient (1) et du dispositif de convoyage (2) ainsi que du produit en vrac qui y est contenu,
- le signal (M) est ensuite traité de manière spécifique à l'installation et/ou au produit en vrac afin de calculer un premier signal (P) représentant le débit massique,
- à partir duquel, conjointement avec la valeur de consigne (W) pour le débit de convoyage de consigne, un premier signal de réglage (Y) est calculé par une première unité de régulation (6) et entré dans un entraînement (7) du dispositif de convoyage (2),
**caractérisé en ce que** le débit massique (F) traverse, après avoir quitté le dispositif de convoyage (2), un dispositif de mesure de débit (11) et le dispositif de mesure de débit (11) mesure un deuxième signal (Fm) représentant le débit massique (F) et, sur la base du deuxième signal (Fm) représentant le débit massique (F) et du premier signal de réglage (Y), une deuxième unité de régulation (12) calcule un deuxième signal de réglage (Y2) et l'entre dans l'entraînement (7) du dispositif de convoyage (2) pour le contrôle du dispositif de convoyage (2).

2. Procédé selon la revendication 1, dans lequel le signal (Fm) représentant le débit massique (F) augmente ou diminue de manière monotone avec la taille du débit massique (F).

3. Procédé selon la revendication 1 ou 2, dans lequel le deuxième signal (Fm) représentant le débit massique (F) suit le débit massique (F) effectif plus vite que le premier signal (P) représentant le débit massique, calculé à partir du signal (M).

4. Procédé selon l'une des revendications précédentes, dans lequel le deuxième signal (Fm) représentant le débit massique (F) est déterminé à l'aide d'une capacité (C) dépendant de la densité de produit en vrac entre des électrodes (20a, 20b, 40a, 40b).

5. Procédé selon l'une des revendications précédentes, dans lequel une relation statique entre le premier signal (P) représentant le débit massique, calculé à partir du signal (M), et le deuxième signal (Fm) représentant le débit massique (F) est déterminée pour différents débits massiques et la relation déterminée est utilisée d'abord pour linéariser ou ajuster le deuxième signal (Fm) représentant le débit massique (F) et, après la linéarisation ou l'ajustement du deuxième signal (Fm) représentant le débit massique (F), et pour calculer, à partir de ce signal linéarisé ou ajusté (Fml) et du premier signal de réglage (Y), le deuxième signal de réglage (Y2).

6. Balance de dosage différentiel avec un récipient (1) avec le produit en vrac à doser et un dispositif de convoyage volumétrique (2)
- avec laquelle le produit en vrac est convoyé avec un débit massique (F) en provenance du récipient,
- dans laquelle le débit massique suit de manière temporelle une valeur de consigne (W) pour le débit de convoyage de consigne,
- avec une unité de mesure de poids (3) et un dispositif de filtrage différentiel, qui comprend un premier dispositif de régulation (6),
- dans laquelle l'unité de mesure de poids (3) est conçue pour la détermination du poids total d'une unité constituée du récipient (1) ainsi que du produit en vrac qui y est contenu ou
- du récipient (1) et du dispositif de convoyage (2) ainsi que du produit en vrac qui y est contenue,
- et émet un signal (M) représentant ce poids total et le transmet au dispositif de filtrage différentiel,
- et dans laquelle le dispositif de filtrage différentiel est conçu pour calculer, à partir du signal (M), le premier signal (P) représentant le débit massique et pour calculer, à partir du premier signal (P) représentant le débit massique et de la valeur de consigne (W) pour le débit de convoyage, un premier signal de réglage (Y),
**caractérisée par** un deuxième dispositif de régulation (12) et un dispositif de mesure de débit massique (11), dans lequel le dispositif de mesure de débit massique (11) est conçu et disposé de façon à ce que le produit en vrac, après avoir quitté le dispositif de convoyage (2), puisse traverser ce dispositif de mesure de débit massique (11) et le dispositif de mesure de débit massique (11) calcule un deuxième signal (Fm) représentant le débit massique et dans laquelle le deuxième dispositif de régulation (12) calcule, sur la base du deuxième signal (Fm) représentant le débit massique et du premier signal de réglage (Y), un deuxième signal de réglage (Y2) et entre celui-ci dans un entraînement (7) du dispositif de convoyage (2) pour le contrôle du dispositif de convoyage (2).

7. Balance de dosage différentiel selon la revendication 6, dans laquelle le dispositif de filtrage différentiel comprend en outre une unité de différenciation (4), une unité de filtrage (5), dans laquelle l'unité de différenciation (4) différencie le signal émis par l'unité de mesure de poids (3),
l'unité de filtrage (5) filtre le signal différencié selon au moins un algorithme afin de calculer le premier signal (P) représentant le débit massique et le premier dispositif de régulation (6) calcule, à partir du premier signal (P) représentant le débit massique et de la valeur de consigne (W) pour le débit de convoyage, le premier signal de réglage (Y).

8. Balance de dosage différentiel selon la revendication 6 ou 7, dans laquelle le dispositif de mesure de débit massique (11) est installé sous le lieu d'éjection du flux massique du dispositif de convoyage (2) et la dynamique de la régulation peut être manipulée en fonction de la distance entre le dispositif de mesure de débit massique (11) et le lieu d'éjection du flux massique par l'intermédiaire du deuxième dispositif de régulation (12).

9. Balance de dosage différentiel selon la revendication 6, 7 ou 8, dans laquelle le dispositif de mesure de débit massique (11) est conçu pour déterminer le deuxième signal (Fm) représentant le débit massique (F) à l'aide d'une capacité électrique (C) dépendant de la densité de produit en vrac entre des électrodes (20a, 20b, 40a, 40b).

10. Balance de dosage différentiel selon la revendication 9, dans laquelle les électrodes (20a, 20b, 40a, 40b) sont fixées au niveau de l'unité pesée ou au niveau d'une unité non pesée de la balance de dosage différentiel et dans laquelle les électrodes (20a, 20b, 40a, 40b) sont réalisées de manière plane ou pliée et/ou mesurent le débit massique dans d'autres directions et/ou sont disposées de manière décalée verticalement dans le sens de passage du flux massique à travers le dispositif de mesure de débit massique (11) et/ou peuvent être tournées mécaniquement autour du flux massique (F).

11. Balance de dosage différentiel selon l'une des revendications 6 à 8, dans laquelle le dispositif de mesure de débit massique (11) est un dispositif, connu en soi, pour la mesure du débit de produits en vrac.

12. Balance de dosage différentiel selon l'une des revendications 6 à 11, dans laquelle le dispositif de mesure de débit massique (11) est conçu pour analyser également des paramètres de la conduction du son à travers le produit en vrac du flux massique et/ou du passage de la lumière ou de l'absorption de la lumière et/ou pour analyser les propriétés magnétiques dans le cas de produits en vrac ferromagnétiques et/ou pour analyser les caractéristiques de transmission pour des micro-ondes électromagnétiques et/ou des particules atomiques.

13. Balance de dosage différentiel selon l'une des revendications 6 à 12, comprenant en outre un dispositif d'identification (30) et un dispositif de correction (31), dans laquelle le dispositif d'identification (30) est conçu et disposé pour déterminer une relation statique à partir du premier signal (P) représentant le débit massique et du deuxième signal (Fm) représentant le débit de convoyage, pour différents débits massiques, et dans laquelle le dispositif de correction (31) est conçu et disposé pour linéariser ou ajuster, sur la base de la relation déterminée, le deuxième signal (Fm) représentant le débit de convoyage et pour entrer, dans le deuxième dispositif de régulation (12), après la linéarisation ou l'ajustement du deuxième signal (Fm) représentant le débit massique (F), un deuxième signal (FmI), linéarisé ou ajusté, représentant le débit massique (F), de façon à ce que le deuxième dispositif de régulation (12) calcule alors, sur la base de ce deuxième signal linéarisé ou ajusté (Fml) représentant le débit de convoyage (F) et du premier signal de réglage (Y), le deuxième signal de réglage (Y2).
